Europäisches Patentamt

**European Patent Office**

**Office européen des brevets**

(11) Veröffentlichungsnummer: **0 231 378**
**A1**

## (12) EUROPÄISCHE PATENTANMELDUNG

Veröffentlicht nach Art. 158 Abs. 3 EPÜ

(21) Anmeldenummer: **85906100.4**

(22) Anmeldetag: **22.07.85**

Daten der zugrundeliegenden internationalen Anmeldung:

(86) Internationale Anmeldenummer:
**PCT/SU85/00062**

(87) Internationale Veröffentlichungsnummer:
**WO87/00469 (29.01.87 87/03)**

(51) Int. Cl.³: **B 23 K 9/16**
**B 23 K 35/38**

(43) Veröffentlichungstag der Anmeldung:
**12.08.87 Patentblatt 87/33**

(84) Benannte Vertragsstaaten:
**CH DE FR GB IT LI SE**

(71) Anmelder: **GOSUDARSTVENNY PROETKNY I NAUCHNO-ISSLEDOVATELSKY INSTITUT NIKELEVO-KOBALTOVOI PROMYSHLENNOSTI (GIPRONIKEL)**
**Nevsky pr. 30**
**Leningrad, 191011(SU)**

(72) Erfinder: **FRIDLYAND, Mikhail Gershenovich**
**ul. Pestelya, 11-139**
**Leningrad, 191028(SU)**

(74) Vertreter: **Patentanwälte Beetz sen. - Beetz jun. Timpe - Siegfried - Schmitt-Fumian**
**Steinsdorfstrasse 10**
**D-8000 München 22(DE)**

(54) **VERFAHREN ZUR LICHTBOGENBEARBEITUNG**

(57) Verfahren zur Lichtbogenbearbeitung von Werkstoffen mit einer ständig regenerierbaren Voll- und einer Hohlelektrode in plasmabildenden Gemischen, die Kohlenwasserstoffe oder Kohlenstoffoxide enthalten, bei dem auf die Ausgangselektrode (2) der Kohlenstoff abgeschieden wird, durch den die ständig regenerierbare eigentliche Kohlenstoffelektrode (1) ausgebildet wird. Die Bearbeitung wird bei einer Temperatur im Kontaktbereich der Ausgangs- und der eigentlichen Elektroden (2,1) durchgeführt, die die Temperatur der Kohlenstoffsublimation nicht überschreitet.

## VERFAHREN ZUR LICHTBOGENBEARBEITUNG

### Gebiet der Technik

Die vorliegende Erfindung bezieht sich auf das Gebiet des Schweißens und der Metallurgie und betrifft insbesondere ein Verfahren zur Lichtbogenbearbeitung von Werkstoffen mit einer ständig regenerierbaren Elektrode.

### Vorhergehender Stand der Technik

Eine der Hauptaufgaben der schweißtechnischen und der metallurgischen Produktion ist gegenwärtig die Verlängerung der Standzeit von Elektroden in verschiedenen Lichtbogeneinrichtungen, die beim Schweißen und bei ähnlichen Metallbearbeitungsvorgängen sowie beim Schmelzen und bei ähnlichen Vorgängen der Behandlung von Metall- und Schlackenbädern in Lichtbogenöfen eingesetzt werden.

Es ist ein Verfahren zur Lichtbogenbearbeitung von Werkstoffen bekannt, (siehe beispielsweise die US-PS Nr. 3307011, Kl. 219-74, 1963), bei dem die Standzeit von Elektroden, darunter von Graphitelektroden, in Lichtbogeneinrichtungen verlängert werden kann. Es besteht darin, daß in den Elektrodenzwischenraum plasmabildende Gasgemische eingeführt werden, die kohlenstoffhaltige Verbindungen wie Kohlenwasserstoffe oder Kohlenstoffoxyd sowie Gase enthalten, die gegenüber dem Elektrodenwerkstoff inert sind. Beim Brennen des elektrischen Lichtbogens spalten sich die kohlenstoffhaltigen Gase unter Ausscheidung des freien Kohlestoffs, der auf mindestens eine der Elektroden ausgefällt wird. Als Gase, die gegenüber dem einen oder dem anderen Werkstoff inert sind, werden Argon oder Helium bei Graphitelektroden und Stickstoff, Luft bei Kupferelektroden eingesetzt.

Durch dieses Verfahren kann die Erosion der Elektroden verringert und dadurch deren Betriebsdauer bei einem Lichtbogenstrom von 400 bis 1000 A verlängert werden.

Jedoch wird durch dieses Verfahren das Gleichgewicht zwischen den Mengen der Verluste an Kohlenstoff und seiner Ausfällung auf der Elektrodenarbeitsfläche nicht ge-

- 2 -

währleistet. Das Gewicht der Elektrode wird entweder ständig verringert, wenn auch mit einer geringen Geschwindigkeit, d.h., die Elektrode erodiert, oder es nimmt ständig zu, d.h., die Elektrode wird in ihren Dimensionen größer. Im ersten Fall wird die Elektrode in Ergebnis zerstört. Im zweiten Fall wird die Brennstabilität des Lichtbogens infolge einer schlechteren Eingrenzung des elektrodennahen Lichtbogenbereichs auf der zugenommenen Elektrodenarbeitsfläche beeinträchtigt.

Die genannte Erscheinung ist durch folgende Ursachen bedingt: erstens dadurch, daß in das plasmabildende Gemisch neben den kohlenstoffhaltigen Verbindungen nur Gase eingeführt werden, die gegenüber dem Elektrodenwerkstoff inert sind; zweitens dadurch, daß die Stromstärke des elektrischen Lichtbogens, die Zusammensetzung und der Verbrauch des plasmabildenden Gemisches in keinem quantitativen Zusammenhang miteinander stehen; drittens dadurch, daß zwischen den Änderungen der Zusammensetzung des plasmabildenden Gemisches in der Zeit, insbesondere während der Anfangsperiode des Lichtbogenbrennens kein Zusammenhang besteht. Durch die Notwendigkeit, die Elektroden entweder in Blickform oder als Hohlelektroden einzusetzen, werden die Möglichkeiten des Verfahrens in manchen Fällen eingeschränkt, weil der Lichtbogen bzw. der Plasmastrahl auf dem Bearbeitungsabschnitt nicht eingegrenzt werden kann.

Aus diesen Gründen hat das genannte Verfahren trotz seines 20jährigen Bestehens bis jetzt keine industrielle Anwendung gefunden.

Es ist auch ein Verfahren zur Plasmalichtbogenbearbeitung von Werkstoffen bekannt (siehe beispielsweise die US-PS Nr. 4 317 984, Kl. 219-75, 1982, die FR-PS Nr. 2 431 240, Kl. H 05 h 1/48, B 23 K 9/16, 1983), welches darin besteht, daß in den Elektroden einer Lichtbogeneinrichtung ein plasmabildendes Gemisch eingeführt wird, das kohlenstoffhaltige Verbindungen und ein Oxydationsmittel enthält.

Das Oxydationsmittel wird während einer Zeitspanne zugeführt, in der der Wärmestrom, der in die Elektrode eingebracht wird, auf der der Kohlenstoff ausgefällt wird, von dem maximalen bis zu einem stationären Wert abnimmt. In Abhängigkeit von der Art des Oxydationsmittels beträgt sein Gehalt im plasmabildenden Gemisch entweder 0,4 bis 0,9 oder 1,05 bis 2,5 bezogen auf das Volumen der Menge, die einer vollständigen Konversion der im Gemisch enthaltenen Kohlenwasserstoffe entspricht. Der erste Wert bezieht sich auf das Oxydationsmittel in Form von Sauerstoff oder Luft, der zweite auf das Oxydationsmittel in Form von Kohlendioxyd. In Abhängigkeit von der chemischen Affinität des Oxydationsmittels mit dem Kohlenstoff der kohlenstoffhaltigen Verbindung wird die letztere in den Elektrodenzwischenraum in einer Mengen von $(0,5 \cdot 10^{-3})/n$ bis $(6 \cdot 10^{-3})/n$ 1/A·s eingeführt, wobei n - Anzahl der Kohlenstoffatome in einem Molekül der eingesetzten kohlenstoffhaltigen Verbindung ist. Die kohlenstoffhaltigen Verbindungen und das Oxydationsmittel können in den Elektrodenzwischenraum sowohl gemeinsam, als auch einzeln eingeführt werden. Im Falle, wenn der Wärmestrom in der Elektrode, auf der der Kohlenstoff ausgefällt wird, den maximalen Wert bereits im Augenblick der Lichtbogenzündung erreicht, wird das Oxydationsmittel zusammen mit dem kohlenstoffhaltigen Gas vor der Zündung des Lichtbogens in den Elektrodenzwischenraum eingeführt.

Durch dieses Verfahren wird der Betrieb der Elektrode bei einer Gleichheit der Verluste und der Abscheidung des Kohlenstoffs auf dieser, d.h. im Zustand ihrer ständigen Regenerierung aus dem plasmabildenden Medium gewährleistet.

In diesem Verfahren sind jedoch die Betriebsbedingungen für die Elektrode im Zustand einer ständigen Regenerierung nur von der Seite des plasmabildenden Mediums festgelegt und die ähnlichen Bedingungen von der Seite der Elektrode nicht berücksichtigt. Dadurch wird die

- 4 -

Reproduzierbarkeit des Zustandes einer ständigen Elektrodenregenerierung bei Änderungen der Lichtbogenstromstärke in einem breiten Bereich erschwert, was zur Elektrodenerosion führt.

Offenbarung der Erfindung

Der Erfindung liegt die Aufgabe zugrunde, ein Verfahren zur Lichtbogenbearbeitung von Werkstoffen mit einer ständig regenerierbaren Elektrode zu schaffen, durch welches eine stabile Reproduzierbarkeit des Zustandes einer ständigen Elektrodenregenerierung durch die Änderung der Technologie der Prozeßführung im Elektrodenzwischenraum und auf der Elektrodenoberfläche gewährleistet wird.

Die gestellte Aufgabe wird dadurch gelöst, daß in einem Verfahren zur Lichtbogenbearbeitung von Werkstoffen mit einer ständig regenerierbaren Voll- und einer Hohlelektrode durch die Einführung eines plasmabildenden Gemisches in den Elektrodenzwischenraum, welches kohlenstoffhaltige Verbindungen aus der Reihe der Kohlenwasserstoffe und der Kohlenstoffoxide enthält und durch welches die Kohlenstoffabscheidung auf mindestens einer der aus dem Kohlenstoff oder aus karbidbildenden Metallen hergestellten Ausgangselektroden während des Lichtbogenbrennens sowie die Ausbildung der eigentlichen Kohlenstoffkathode auf der Oberfläche dieser Elektrode gewährleistet wird, erfindungsgemäß die Bearbeitung bei einer Temperatur im Kontaktbereich der Ausgangselektrode und der eigentlichen Elektrode durchgeführt wird, die die Temperatur der Kohlenstoffsublimation nicht überschreitet.

Zweckmäßigerweise wird die Bearbeitung mit einer vollen Ausgangselektrode bei einer Stromdichte in der Ausgangselektrode von $10^4$ bis $10^5$ A/cm$^2$ durchgeführt. Durch die Lichtbogenbearbeitung von Werkstoffen mit einer ständig regenerierbaren Elektrode bei einer Temperatur im Kontaktbereich der Ausgangselektrode und der eigentlichen Elektrode, die die Temperatur der Kohlenstoffsublimation nicht überschreitet, wird eine stabile Reproduzierbarkeit des Zustandes einer ständigen Elektrodenregenerierung in einem breiten Änderungsbereich der Lichtbogenkennwerte gewährleistet, wodurch die Standzeit der beim Schweißen und in der Metallurgie einzusetzenden Elektroden in Lichtbogeneinrichtungen verlängert wird.

## Kurze Beschreibung der Zeichnungen

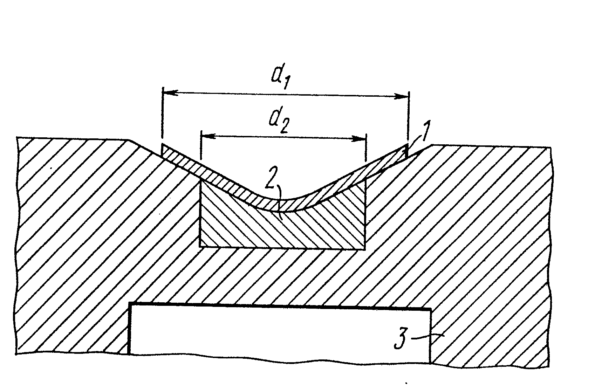

Nachstehend wird die Erfindung an Hand von Durchführungsbeispielen unter Bezugnahme auf die beiliegende Zeichnung erläutert, in der ein Schema dargestellt ist, durch welches das erfindungsgemäße Verfahren zur ständigen Elektrodenregenerierung veranschaulicht wird.

## Die bevorzugte Durchführungsvariante der Erfindung

Das Verfahren zur Lichtbogenbearbeitung von Werkstoffen mit Voll- und Hohlelektroden besteht im folgenden.

In den Raum zwischen den Elektroden einer Lichtbogeneinrichtung wird ein plasmabildendes Gemisch eingeführt, das kohlenstoffhaltige Verbindungen enthält. Als letztere werden Kohlenwasserstoffe in ihrer Ausgangsform sowohl im gasförmigen Zustand (Erdgas mit verschiedener Zusammensetzung, Methan, Azetylen usw.), als auch im verflüssigten Zustand (Propan, Butan, deren Gemische usw.) sowie Kohlenstoffoxide, u.zw. das Monoxyd $CO$ und das Dioxyd $CO$ und das Dioxyd $CO_2$ verwendet. Beim Brennen des Lichtbogens in einer die kohlenstoffhaltigen Verbindungen enthaltenden Gasatmosphäre wird der Kohlenstoff als Spaltprodukt dieser Verbindungen im Lichtbogen auf die Arbeitsfläche mindestens der einen der Ausgangselektroden ausgefällt, und auf dieser Oberfläche wird die eigentliche Kohlenstoffelektrode ausgebildet, die aus dem plasmabildenden Gemisch ständig regeneriert wird.

Die Ausgangselektrode in Form einer Voll- oder einer Hohlelektrode wird aus Kohlenstoff (vorzugsweise in

- 6 -

Graphitform) oder aus karbidbildenden Metallen wie Hafnium, Zirkonium, Titan u.a. hergestellt. Die Bearbeitung wird bei einer Temperatur im Kontaktbereich der vollen oder der hohlen Ausgangselektrode mit der ständig regenerierbaren eigentlichen Elektrode durchgeführt, die die Temperatur der Graphitsublimation von ca. 4000 K nicht überschreitet. Die Bearbeitung mit einer vollen Ausgangselektrode wird bei einer Stromdichte in der Ausgangselektrode durchgeführt, die in einem Bereich von $10^4$ bis $10^5$ A/cm$^2$ liegt.

Im allgemeinen Fall wird der Betrieb der Elektrode im Zustand einer ständigen Regenerierung unter der Voraussetzung sichergestellt, daß die Geschwindigkeit des Werkstoffverlustes $G_1$ aus der Elektrode die Geschwindigkeit der Abscheidung $G_2$ des gleichen Werkstoffs auf dieser von außen nicht überschreitet, d.h., wenn $G_1 \leqslant G_2$ ist.

Gegebenenfalls werden die Verluste $G_1$ beim Betrieb der Elektrode als Kathode hauptsächlich durch die Verdampfung ihres Werkstoffs und die Abscheidung $G_2$ durch das Ausfällen des Werkstoffs in Form von positiv geladenen Ionen bestimmt, die auf der Arbeitsfläche der Kathode neutralisiert werden.

Eine ständige Regenerierung der Elektrode (Kathode) ist aus einer beliebigen Gasatmosphäre (einem plasmabildenden Gemisch) möglich, die Verbindungen enthält, die bei Lichtbogentemperaturen unter Ausscheidung von Produkten gespalten werden, welche zum Ausfällen auf der Elektrodenarbeitsfläche fähig sind sowie Thermoemissions- und wärmephysikalische Eigenschaften haben. Die Verfügbarkeit, ein billiger Preis, ein leichter Transport, ein einfacher und sicherer Betrieb lassen sowohl der Atmosphäre, durch die eine ständige Elektrodenregenerierung gewährleistet wird, als auch den kohlenstoffhaltigen Verbindungen wie Kohlenwasserstoffe, Kohlenstoffoxyde CO (Monoxyd) und $CO_2$ (Dioxyd) den Vorzug zu geben. Durch die Spaltung dieser Verbindungen im Lichtbogen wird ne-

- 7 -

ben den anderen Komponenten auch ein Kohlenstoff erzeugt, der sowohl eine hohe Phasenübergangstemperatur (Sublimationstemperatur ca. 4000 K), als auch eine verhältnismässig geringe Austrittsarbeit (4,7 eV) hat.

Nachstehend wird das Prinzipbild einer ständig regenerierbaren Elektrode einer Lichtbogeneinrichtung beim Brennen des Lichtbogens in einem plasmabildenden Medium erläutert, das kohlenstoffhaltige Verbindungen enthält.

Die eigentliche Elektrode (Kathode) 1 mit dem Durchmesser $d_1$ wird als eine dünne Schicht auf die Oberfläche einer vorher angeordneten vollen Ausgangsstabelektrode 2 mit dem Durchmesser $d_2$ und des an diese anliegenden Abschnitts einer wassergekühlten Kupferhalterung 3 ausgefällt. Um die Ausbildung der eigentlichen Elektrode 1 zu beschleunigen und ihre Haftung mit der Ausgangselektrode 2 zu verbessern, wird die letztere aus Graphit oder einem karbidbildenden Metall hergestellt. Die Ausgangselektrode 2 kann sowohl eine Voll-, als auch eine Hohlelektrode sein, in eine wassergekühlte Kupferhalterung 3 eingepreßt oder frei angeordnet werden.

Die Ausgangselektrode 2 dient als Arbeitselektrode nur im ersten Augenblick nach der ersten Lichtbogenzündung vor der Ausbildung der eigentlichen Elektrode 1 aus dem Kohlenstoff, der aus der kohlenstoffhaltigen Gasatmosphäre des Lichtbogens ausgefällt wird. Dann wird die Ausgangselektrode 2 zu einem passiven Element, das wie auch die wassergekühlte Kupferhalterung 3 die Funktion eines Gliedes zur Wärmeübertragung von der Arbeitsfläche der eigentlichen Elektrode 1 an das Kühlmedium erfüllt.

Darin besteht der wichtigste und der grundsätzliche Unterschied zwischen der ständig regenerierbaren Elektrode und der in dem einen oder dem anderen Maße erodierenden konventionellen Elektrode, bei der der Elektroden- bzw. der Kathodenlichtbogenbereich ausschließlich und immer an die Oberfläche gebunden ist, die entweder durch den Werkstoff der Ausgangselektrode 2 (W, Mo in Argon) oder durch die Verbindungen dieses Werkstoffs mit den Komponenten der Gasatmosphäre (Hf, Zr, Ti in der Luft) gebildet ist. Deswegen ist der Durchmesser $d_2$ der Ausgangselektrode 2 bei den konventionellen Elektroden immer gleich oder größer als der Durchmesser der Arbeitsfläche, die von dem elektrodennahen Lichtbogenbereich erfaßt wird. Der Durchmesser $d_1$ der eigentlichen Elektrode 1 ist aber im Falle ihrer ständigen Regenerierung in der Regel größer als der Durchmesser $d_2$ der Ausgangselektrode 2, wie es durch unsere Untersuchungen nachgewiesen wurde. So wird beispielsweise auf einer Elektrode, die eine Kupferhalterung 3 mit der darin eingepreßten Ausgangselektrode 2 in Form eines Vollgraphitstabes mit dem Durchmesser $d_2 = 0{,}15$ cm darstellt, bei einem Lichtbogenstrom von 500 A die eigentliche Graphitelektrode mit einem Durchmesser $d_1$ von ca. 0,3 cm aus der Gasphase ausgebildet und ständig regeneriert.

Ausgehend davon, daß eine ständige Elektrodenregenerierung nur bei einer auf der Arbeitsfläche der eigentlichen Elektrode 1 vorliegenden Gleichheit der Werkstoffzuwanderung aus der Gasphase und der Werkstoffabwanderung infolge der Verdampfung möglich ist, gibt es zwei Hauptbedingungen für den Betrieb der Elektrode in einem derartigen Zustand.

Durch die erste Bedingung wird der Gehalt an dem ausfällbaren Kohlenstoff in der Gasphase festgelegt. Sie ist in den obengenannten Patentschriften, u.zw. in der US-PS Nr. 4 317 984 und in der FR-PS Nr. 2 431 240 festgehalten.

Durch die zweite Bedingung wird die Wärmeabfuhr von der Arbeitsfläche der Elektrode an ihr Kühlmedium festgelegt. Sie besteht darin, daß beim Brennen des Lichtbogens mit einem vorgegebenen Strom die Temperatur der Ausgangselektrode 2 im Kontaktbereich mit der eigentlichen Elektrode 1 die Temperatur des Phasenübergangs (der Schmelzung oder der Sublimation) des ausfällbaren Werkstoffs nicht überschreiten darf, die für den Graphit ca. 4000 K beträgt.

Die Temperaturverteilung in der zusammengesetzten Elektrode, bei der auf die Arbeitsfläche der eigentlichen Elektrode 1 ein Wärmestrom Q trifft, der über die Ausgangselektrode 2 und die Kupferhalterung 3 an das Kühlmedium abgeführt wird, wird im allgemeinen Fall durch die bekannten Abhängigkeiten der Wärmeübertragung über eine mehrlagige Wand beschrieben.

$$T_1 - T_2 = \frac{Q}{F} \sum R_i = g \sum R_i \quad ,$$

worin

$T_1$ - Temperatur auf der Arbeitsfläche der eigentlichen Elektrode 1;

$T_1$ - Temperatur im Kontaktbereich der Halterung 3 mit dem Kühlmedium, K;

F - Fläche der Wärmeeinbringung in die eigentliche Elektrode 1, $m^2$;

q - Dichte des in die eigentliche Elektrode 1 eingebrachten Wärmestroms, $W/m^2$;

$R_i = \dfrac{S_i}{\lambda_i}$ - Wärmewiderstand eines jeden der Glieder

der Wärmeübertragung von der Arbeitsfläche der eigentlichen Elektrode 1 an das Kühlmedium, $m^2 \cdot K \cdot W^{-1}$;

$S_i$ - Ausdehnung eines jeden der Wärmeübertragungsglieder, m;

$\lambda_i$ - Wärmeleitfähigkeit des Werkstoffs eines jeden der Wärmeübertragungsglieder, $W \cdot m^{-1} \cdot K^{-1}$

sind.

Für eine volle Ausgangselektrode 2 ist beispielsweise $R = d_2/2\lambda$ , worin $d_2$ - Durchmesser der Ausgangselektrode 2 ist.

Die Wärmeleitfähigkeit von Kupfer ($394 \ W \cdot m^{-1} K^{-1}$) ist wesentlich größer als bei Graphit (ca. $60 \ W \cdot m^{-1} K^{-1}$) und karbidbildenden Metallen wie Hafnium ($21 \ W \cdot m^{-1} K^{-1}$), Zirkonium ($17 \ W \cdot m^{-1} K^{-1}$), Titan ($17 \ W \cdot m^{-1} K^{-1}$) u.a.

Folglich kann die Temperatur der Ausgangselektrode 2 im Kontaktbereich mit der eigentlichen Elektrode 1 auf zweifache Weise gesenkt werden.

- 10 -

Die erste Möglichkeit besteht in der Verringerung des Wärmewiderstandes der Ausgangselektrode 2, die nur durch die Verkleinerung des Durchmessers $d_2$ dieser Elektrode erzielt wird, was bei der vorgegebenen Stromstärke mit einer Vergrößerung der Stromdichte in der Elektrode gleichbedeutend ist.

In der Tabelle 1 sind die durch Berechnungen ermittelten und experimentell bestätigten Temperaturen des bei einer Stromstärke von 500 A in einem Gemisch von Kohlendioxyd und Erdgas brennenden Lichtbogens im Kontaktbereich der Ausgangselektrode 2 und der eigentlichen Elektrode 1 in Abhängigkeit von dem Durchmesser und der Stromdichte in der Graphit-Ausgangselektrode 2 angeführt.

Tabelle 1

| Durchmesser der Ausgangselektrode $d_2$ | Stromdichte in der Ausgangselektrode 2 $\dfrac{4 J}{\pi d_2^2}$ | Temperatur im Kontaktbereich der Ausgangselekt.2 m.d. eigentlichen Elektrode 1 | Anmerkung |
|---|---|---|---|
| cm | A/cm$^2$ | K | |
| 0,15 | $2,83 \cdot 10^4$ | 3605 | Elektrode (Kathode) arbeitet im Zustand einer ständigen Regenerierung |
| 0,20 | $1,59 \cdot 10^4$ | 3919 | - " - |
| 0,26 | $9,42 \cdot 10^3$ | 4216 | Elektrode (Kathode) wird zerstört |
| 0,30 | $7,07 \cdot 10^3$ | 4510 | Elektrode (Kathode) wird intensiv zerstört |
| 0,50 | $2,55 \cdot 10^3$ | 4915 | - " - |

Die Analyse der angeführten Werte zeigt, daß bei einer Stromdichte in der Ausgangselektrode 2 unter $10^4$ A/cm$^2$, d.h., bei deren $d_2$ über der kritischen Größe für den Strom von 500 A liegendem Durchmesser d, die Elektrode (Kathode) zerstört wird, weil im Kontaktbereich der Ausgangselektrode 2 mit der eigentlichen Elektrode 1 die Temperatur der Graphitsublimation von ca. 4000 K überschritten wird. Ähnliche Resultate wurden auch für alle anderen untersuchten Werte der Stromstärke erhalten.

Auf diese Weise wird durch die Stromdichte von $10^4 A/cm^2$ in der Ausgangselektrode 2 beim genannten Strom derjenige kritische Durchmesser der Ausgangselektrode 2 vorgegeben, dessen Vergrößerung (Durchmesser $d_2$) zur Zerstörung der Elektrode führt, weil im Kontaktbereich der Ausgangselektrode 2 mit der eigentlichen Elektrode 1 die Temperatur der Graphitsublimation überschritten wird.

Bei einer Stromdichte über $10^5 A/cm^2$ wird infolge einer kleinen Kontaktfläche der eigentlichen Elektrode 1 mit der Ausgangselektrode 2 deren Haftfestigkeit stark verringert. Das führt zur mechanischen Zerstörung der Elektrode infolge Abblätterung der eigentlichen Elektrode 1 von der Ausgangselektrode 2, insbesondere bei Übergangszuständen wie Ein- und Ausschalten des Lichtbogens, sprunghafte Änderung seiner Stromstärke usw.

Die erste Möglichkeit ist bei der Lichtbogenbearbeitung mit einer Vollstabelektrode, wie Schweißen, Auftragschweißen, Aufspritzen usw. vorzuziehen.

Die zweite Möglichkeit besteht in der Verringerung der Dichte q des über die eigentliche Elektrode 1 eingebrachten Wärmestroms, d.h., in der Vergrößerung der Arbeitsfläche F der eigentlichen Elektrode 1. Diese Möglichkeit wird bei der Lichtbogenbehandlung mit einer aus dem gleichen Werkstoff wie die Vollelektrode gefertigten Hohlelektrode, über deren Kanal das gesamte plasmabildende Gemisch oder ein Teil davon zugeführt wird, beispielsweise bei der Behandlung von metallurgischen Schmelzbädern, bei der Gaserhitzung usw. vorgezogen.

Beispiel 1. Die Plasma-Bördelschweißung von 0,3 cm dicken Stahlblechen wurde im Kohlendioxyd mit einem Verbrauch von 0,4 bis 0,6 $m^3/h$ durchgeführt. Die Schweißung wird mit 195 A Gleichstrom mit einem ausladenden Lichtbogen mit Hilfe eines Plasmabrenners mit einer zusammengesetzten wassergekühlten Elektrode, die aus einer Kupferhalterung 3 und der darin eingepreßten Ausgangselektrode (Kathode) aus einem Hafniumstab mit einem Durchmesser $d_2$ von 0,05 cm besteht, bei einer Stromdichte in der Ausgangselektrode 2 von $9,934 \cdot 10^{-4}$ A/cm$^2$ geführt. Die Schweißung verläuft unter einer ständigen Regenerierung der eigentlichen Elektrode 1, d.h., bei deren gleichbleibender Größe und Geometrie während einer praktisch unbegrenzten Zeit, was davon zeugt, daß die Temperatur im Kontaktbereich der eigentlichen Elektrode 1 und der Ausgangselektrode 2 unter der Temperatur der Graphitsublimation liegt.

Bei einer Erhöhung des Schweißstromes auf 210 A, was beim genannten Durchmesser $d_2$ des aktiven Einsatzes von 0,05 cm einer Stromdichte in diesem von $1,07 \cdot 10^5$ A/cm$^2$ entspricht, die die obere zulässige Grenze der Stromdichte von $10^5$ A/cm$^2$ um nur 6,9% überschreitet, kommt es bei jeder Abschaltung des Lichtbogens zum Abreißen der eigentlichen Elektrode 1 von der Ausgangselektrode 2. Dadurch wird ein Dauerbetrieb der Elektrode im Zustand einer ständigen Regenerierung nicht gewährleistet.

Beispiel 2. Durch das mechanisierte Plasmaspritzen wurde ein hitzebeständiger Schutzüberzug aus Pulverkorund (Aluminiumoxyd) auf die Oberfläche von Platten aus Karborund (Siliziumkarbid) aufgetragen. Für die Plasmabildung wurde ein Gemisch aus Erdgas und Kohlendioxyd mit einem Verbrauch von 2,0 und 6,0 m$^3$/h entsprechend verwendet. Das Spritzen wurde mit Gleichstrom mit einer Stromstärke von 500 A mit Hilfe eines Plasmabrenners mit einer zusammengesetzten Elektrode (Kathode) in Form einer wassergekühlten Kupferhalterung 3 mit der darin eingepreßten Graphitstab-Ausgangselektrode 2 mit einem Durchmesser von 0,12 cm, bei einer Stromdichte in der Ausgangselektrode von $24,4 \cdot 10^4$ A/cm$^2$ geführt. Die Elektrode arbeitet im Zustand einer ständigen Regenerierung während mehrerer Monate.

Beispiel 3. Die Erhitzung der Schlacke und das Blasen zwecks Reduktion der darin enthaltenen Elemente durch das Blasen mit einem Gasstrahl, der im elektrischen Gleichstromlichtbogen zwischen einer Graphit-Ringelektrode als Kathode und dem Schlakenbad als Anode erhitzt wurde, wurde mit einem Strom von 1100° A durchgeführt. Als Gasatmosphäre für den Lichtbogen diente ein Gemisch aus Erdgas und Kohlendioxyd mit einem Verbrauch von 10 und 5 $m^3$/h entsprechend, das durch einen Axialkanal mit einem Durchmesser von 25 mm in der Graphit-Ausgangselektrode mit einem Außendurchmesser $d_2$ von 125 mm zugeführt wurde.

Unter diesen Bedingungen wurde auf der Stirnfläche der Graphit-Ausgangselektrode 2 die eigentliche Kohlenstoffelektrode 1 ausgebildet, die im Zustand einer ständigen Regenerierung bei einer kleineren Temperatur im Kontaktbereich der Ausgangselektrode 2 mit der eigentlichen Elektrode 1 als die Temperatur der Kohlenstoffsublimation gearbeitet hat.

Industrielle Anwendbarkeit

Die vorliegende Erfindung kann bei der Plasmabearbeitung von Metallen wie Schweißen, Auftragschweißen, Spritzen sowie bei der Behandlung von Metall- und Schlakenbädern in der Metallurgie Anwendung finden.

- 14 -

PATENTANSPRÜCHE

1. Verfahren zur Lichtbogenbearbeitung von Werkstoffen mit einer ständig regenerierbaren Voll- und einer Hohlelektrode durch die Einführung eines plasmabildenden Gemisches in den Elektrodenzwischenraum, welches kohlenstoffhaltige Verbindungen aus der Reihe der Kohlenwasserstoffe und der Kohlenstoffoxide enthält und durch welches die Kohlenstoffabscheidung auf mindestens einer der aus Kohlenstoff oder aus karbidbildenden Metallen gefertigten Ausgangselektroden während des Lichtbogenbrennens sowie die Ausbildung der eigentlichen Elektrode auf der Oberfläche dieser Elektrode gewährleistet wird, dadurch gekennzeichnet, daß die Bearbeitung bei einer Temperatur im Kontaktbereich der Ausgangselektrode mit der eigentlichen Elektrode (2, 1) durchgeführt wird, die die Temperatur der Kohlenstoffsublimation nicht überschreitet.

2. Verfahren nach Anspruch 1, dadurch g e k e n n - z e i c h n e t , daß die Bearbeitung mit einer vollen Ausgangselektrode (2) bei einer Stromdichte in der Ausgangselektrode (2) von $10^4$ bis $10^5$ A/cm$^2$ durchgeführt wird.

# INTERNATIONAL SEARCH REPORT

## I. CLASSIFICATION OF SUBJECT MATTER (if several classification symbols apply, indicate all) 3

According to International Patent Classification (IPC) or to both National Classification and IPC

IPC⁴ – B 23 K 9/16, 35/38

## II. FIELDS SEARCHED

### Minimum Documentation Searched 4

| Classification System | Classification Symbols |
|---|---|
| IPC⁴ . | B 23 K 9/00, 9/16, 35/38, 35/40 |

Documentation Searched other than Minimum Documentation
to the Extent that such Documents are Included in the Fields Searched 5

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| A | US,A,4317984(Mikhail G. Fridlyand),02 March 1982(02.03.82),see the abstract | 1 |
| A | SU,A1,695074(D.G.Bykhovsky et al.)07 December 1981 (07.12.81),see the claims | 1 |
| A | SU,A1,818793(Gosudarstvenny proektny i nauchno-issledovatelsky institut "Gipronikel" 07 April 1981,(07.04.81),see the claims | 1 |
| A | SU,A1,844178,(Gosudarstvenny proektny i nau-chno-issledovatelsky institut "Gipronikel" 13 August 1981 (13.08.81), see the claims | 1 |
| A | SU,A1,841850(A.L.Bolotnikov et al.)30 June 1981(30.06.81),see the claims | 1 |
| A | E.M.Esibyan "Plazmenno-dugovaya apparatura", 1971,Tekhnika (Kiev), see pages 6-9,70-71 | 2 |

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the International filing date but on or after the priority date claimed

"T" later document published on or after the International filing date or priority date and not in conflict with the application, but cited to understand the principle or theory underlying the invention

"X" document of particular relevance

## IV. CERTIFICATION

| Date of the Actual Completion of the International Search 2 | Date of Mailing of this International Search Report 2 |
|---|---|
| 15 January 1986(15.01.86) | 15 April 1986(15.04.86) |
| International Searching Authority 1 | Signature of Authorized Officer 20 |
| ISA/SU | |

Form PCT/ISA/210 (second sheet) (October 1977)